# EUROPEAN PATENT APPLICATION

(11) **EP 1 637 268 A1**
(43) Date of publication of application: **22.03.2006**
(21) Application number: 04746346.8
(22) Date of filing: 24.06.2004
(51) Int. Cl.: B23K 3/06

(54) **WIRE MATERIAL PAYOUT DEVICE AND WIRE SOLDER**

(30) Priority: 26.06.2003 JP 2003183011; 30.10.2003 JP 2003371320; 28.11.2003 JP 2003399558; 25.12.2003 JP 2003430563; 30.01.2004 JP 2004023471; 26.02.2004 JP 2004052412; 27.02.2004 JP 2004052602; 31.03.2004 JP 2004101809; 31.03.2004 JP 2004103109
(71) Applicant: PENTEL KABUSHIKI KAISHA, Chuo-ku, Tokyo 103-8538 (JP); SENJU METAL INDUSTRY CO., LTD., Tokyo, 120-8555 (JP)
(72) Inventor: ISHII, Kou, c/o Pentel Kabushiki Kaisha, Tokyo 1038538 (JP); YANAGAWA, Yoshiaki, c/o Pentel Kabushiki Kaisha, Tokyo 1038538 (JP); MARUYAMA, Shigeki, c/o Pentel Kabushiki Kaisha, Tokyo 1038538 (JP)
(74) Representative: Charlton, Peter John
(86) International application number: PCT/JP2004/008877
(87) International publication number: WO 2005/000515

(57) **Abstract**

An object of the present invention is to provide a wire rod feeding device in which a soft wire rod can be inserted easily. To achieve this object, in the wire rod feeding device in accordance with the present invention, the wire rod is gripped and released, and is run out by a chuck body (7) which is movable back and forth, and opening means for keeping an opened state of the chuck body is provided.

## Description

### Technical Field

The present invention relates to a wire rod feeding device for feeding a wire rod formed of a soft material and a wire solder used for the device.

### Background Art

In soldering electronic equipment, a manual soldering technique, in which a wire solder formed by fabricating a solder into a wire form or a resin flux cored solder formed by impregnating the interior of wire solder with a flux component such as rosin is applied with a soldering iron, is used. In particular, the manual soldering technique is widely used for soldering parts that cannot be soldered by flow soldering or reflow soldering or for making correction after soldering. As the size of electronic equipment has decreased in recent years, electronic components have decreased in size, and hence the wire diameter of the wire solder or resin flux cored solder that is used for manual soldering has also decreased. If the wire diameter decreases, the solder, which is formed of a soft material, is bent at the time of supply. As a device for supplying a solder with a small wire diameter, a device in which a wire solder is run out by a chuck that can be opened and closed and can be moved back and forth is known (refer to Patent Document 1). Specifically, a chuck formed with a triangular protrusion for holding a wire solder is arranged in an outer cylinder, and a holding member for preventing the wire solder from retreating (returning) is arranged at a position in front of and separated from the chuck. Also, at the rear of the chuck, a lever for performing an operation for feeding the wire solder by advancing the chuck against the urging force of a coil spring is provided.

The above-described conventional art has high usability because a fixed amount of wire solder can be run out by the operation of the lever.
Also, generally, most of the wire solders now used have a diameter of 0.7 to 1.0 mm, and in recent years, the wire solders with a diameter of 0.5 mm or 0.3 mm have been demanded and have been used. The sizes of products have been decreased year by year, and therefore parts contained in the products have been decreased in size, so that the diameter of wire solder has been decreased with the decrease in part size.
However, in inserting the wire solder whose diameter is decreased as described above into the above-described wire rod feeding device, some problem arises. Specifically, since the chuck is normally closed by the coil spring, the insertion workmust be performed while the chuck is opened by the operation of lever. That is to say, aside from the insertion of a thick wire solder, a thin wire solder is inserted by one hand while the lever operation is performed against the urging force by the other hand, so that it is difficult to perform positioning of the tip end of wire solder, and sometimes the wire solder comes into contact with the inner surface of chuck and thereby is bent.
Patent Document: Microfilm of Japanese Utility Model Application No. 62-169776 (Japanese Utility Model Laid-Open No. 1-72974)

### Disclosure of the Invention

An object of the present invention is to provide a wire rod feeding device in which a soft wire rod such as a wire solder can be inserted easily.
To achieve the above object, the present invention provides, as a first gist of the invention, a wire rod feeding device which is a device for feeding a wire rod formed of a soft material, characterized in that the wire rod is gripped and released, and is run out by a chuck body which is movable back and forth; and opening means for keeping an opened state of the chuck body is provided, provides, as a second gist of the invention, a wire rod feeding device which is a device for feeding a wire rod formed of a soft material, characterized in that the wire rod is gripped and released, and is run out by a chuck body which is movable back and forth; and a returning operation of an operating member for operating the chuck body is performed gradually, provides, as a third gist of the invention, a wire rod feeding device which is a device for feeding a wire rod formed of a soft material, characterized in that the wire rod is gripped and released, and is run out by a chuck body which is movable back and forth; and the length of a wire rod gripping portion of the chuck body is set so as to be longer than the running-out amount of the wire rod, and provides, as a fourth gist of the invention, a wire rod feeding device which is a device for feeding a wire rod formed of a soft material, characterized in that wire rod storage means for storing the soft wire rod is provided on a device body.

The wire rod formed of a soft material is a wire rod formed of a material having a hardness, for example, equal to or lower than 45 in the Brinell hardness test though various measuring methods are available. As one example, a wire solder, an enameled wire, a copper wire, a tussah, a thread for sewing, and the like can be cited. In the case of the wire solder, a wire solder having a hardness of 4 to 20 in the Brinell hardness test is generally used.

According to the above-described configuration, the soft wire rod can be inserted easily in the wire rod feeding device.

The operation of the wire rod feeding device in accordance with the present invention is explained below. At the time of wire rod insertion, since the chuck body is open, the wire rod is inserted easily in the chuck body, and the wire rod passing through an internal space of the wire rod feeding device is supplied to the chuck body. Also, when the chuck body is returned from an open state, the operating member returns gradually. Further, the soft wire rod in a curved state is pressed by the opening and closing chuck body, and is corrected into a straight-line shape by the pressing force thereof. Moreover, since the amount (length) being pressed and corrected is larger than the running-out amount of wire rod, the wire solder is not run out without being corrected, and is always run out in a pressed and corrected state at least once. Also, the wire rod is supplied from the wire rod storage means provided on the device body and is run out.

### Brief Description of the Drawings

Figure 1 is a longitudinal half sectional view showing a first embodiment of a wire rod feeding device in accordance with the present invention;
Figure 2 is a perspective view of a slide member and a knock piece;
Figure 3 is an enlarged sectional view showing a tip end portion of the wire rod feeding device shown in Figure 1;
Figure 4 is a sectional view showing a modification of the tip end portion shown in Figure 3;
Figure 5 is a longitudinal sectional view of an essential portion of a chuck body;
Figure 6 is a longitudinal half sectional view showing an insertion process for a wire rod;
Figure 7 is an enlarged view of an essential portion of Figure 6;
Figure 8 is a longitudinal sectional view showing a modification of a connecting structure between a barrel and a rear casing;
Figure 9 is a sectional view taken along the line Z-Z of Figure 8;
Figure 10 is a longitudinal half sectional view showing a modification of a ring member;
Figure 11 is a transverse sectional view showing a modification of a ring member;
Figure 12 is a transverse sectional view showing a modification of a ring member;
Figure 13 is a transverse sectional view showing a modification of a ring member;
Figure 14 is a longitudinal half sectional view showing a return process of a knock piece;
Figure 15 is a perspective view of an essential portion showing a modification of a knock piece;
Figure 16 is a longitudinal half sectional view showing a return process of a knock piece;
Figure 17 is a perspective view of an essential portion showing a modification of a knock piece;
Figure 18 is a longitudinal sectional view showing a modification of a knock piece of a rear casing;
Figure 19 is a top view of a reel;
Figure 20 is an appearance view of an essential portion showing a modification of a rear casing;
Figure 21 is an appearance perspective view of an essential portion of a rear casing;
Figure 22 is a longitudinal half sectional view showing a modification of a reel;
Figure 23 is an appearance view of an essential portion showing a modification of a reel attaching structure;
Figure 24 is a plan view showing a modification of a reel;
Figure 25 is a longitudinal sectional view taken along the line W-W of the reel shown in Figure 24;
Figure 26 is a longitudinal sectional view showing a modification of storage means;
Figure 27 is a longitudinal half sectional view showing a rear end portion of the wire rod feeding device shown in Figure 1;
Figure 28 is an appearance view showing a second embodiment of a wire rod feeding device in accordance with the present invention;
Figure 29 is a left-hand side sectional view of the wire rod feeding device shown in Figure 28;
Figure 30 is a longitudinal sectional view showing the operation of the wire rod feeding device shown in Figure 28;
Figure 31 is a longitudinal sectional view showing a third embodiment of a wire rod feeding device in accordance with the present invention;
Figure 32 is a longitudinal sectional view showing an example in which the wire rod feeding device shown in Figure 31 is used;
Figure 33 is a plan view of a reel in which a groove portion is not formed in a rotating shaft portion; and
Figure 34 is a longitudinal sectional view of the reel shown in Figure 33.

### Description of Symbols

- 1: barrel
- 2: slider member
- 3: inclined surface
- 4: window hole
- 5: knock piece (operating member)
- 5a: pressing operation surface
- 5b: inclined surface
- 5c: depressed portion (step portion)
- 5d: inclined surface
- 5e: depressed portion (step portion)
- 6: pressing portion
- 7: chuck body
- 7a: groove (wire rod gripping portion)
- 8: chuck ring
- 9: elastically springing member
- 10: distal member
- 10a: inner surface step portion
- 11: distal end pipe (wire rod protective pipe)
- 12: distal end pipe
- 13: wire rod guide member
- 14: locking member (or, detent)
- 15: spacer
- 16: guide pipe
- 17: wire rod inserting member
- 17a: through hole
- 17b: inner surface conical portion
- 17c: outer surface conical portion
- 18: engagement portion
- 19: rear casing (opening means)
- 20: ring member
- 20a: small-diameter portion
- 20b: large-diameter portion
- 20c: inclined surface
- 21: flat portion
- 22: expanding portion
- 22a: small groove portion
- 22b: large groove portion
- 22c: inclined surface
- 23: arcuate portion
- 24: plane portion
- 25: holding element

- 26: gap
- 27: reel (wire rod storage means)
- 28: collar portion
- 29: rotating shaft
- 30: through hole
- 31: rear casing
- 32: holding element
- 33: gap
- 34: reel
- 35: through hole
- 36: inner surface protrusion
- 37: collar portion
- 38: storage means
- 39: engagement portion
- 40: slit
- 41: chamfered portion
- 42: gripping portion
- 43: barrel
- 44: knock piece
- 45: slider member
- 46: protrusion
- 47: convex portion
- 48: concave portion
- 49: barrel
- 50: front casing
- 51: cartridge portion
- 52: rear cylinder

### Best Mode for Carrying Out the Invention

### [First embodiment]

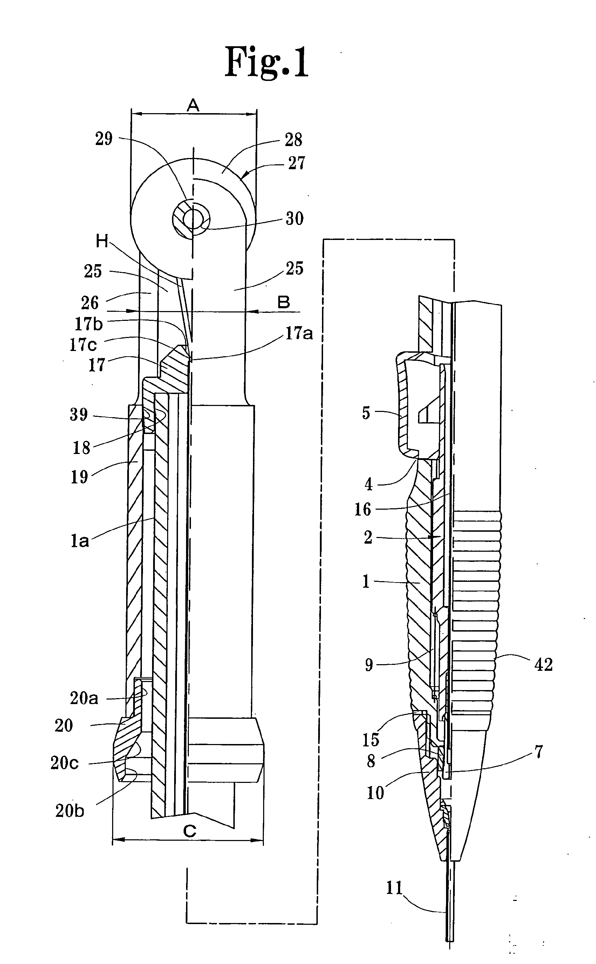

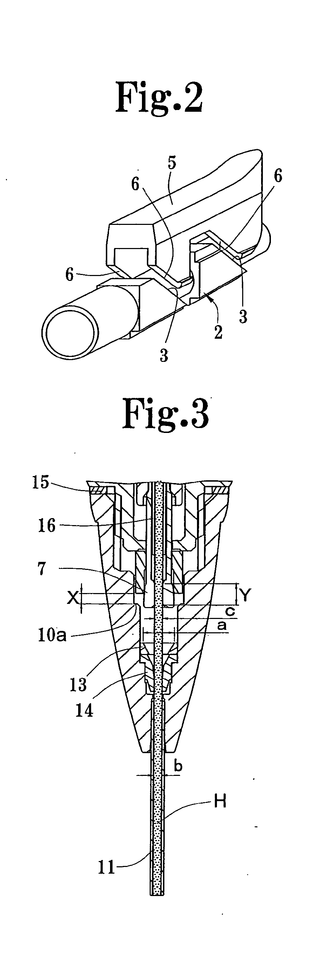

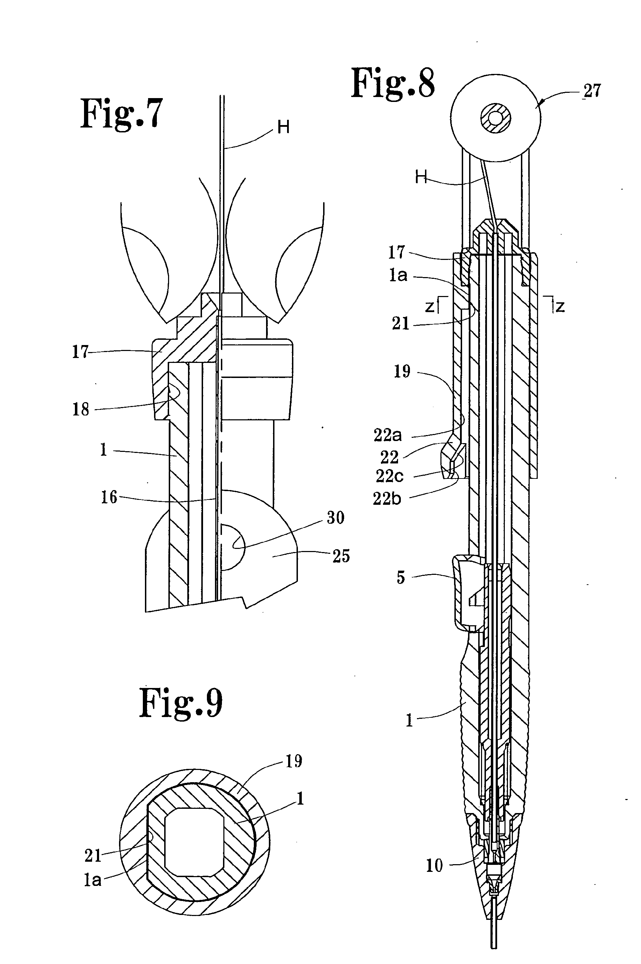

First, a first embodiment of a wire rod feeding device in accordance with the present invention will be described. The wire rod feeding device of this embodiment is a device for running out a wire solder H. This device is what is called a side knock type wire rod feeding device in which a knock piece is provided on the side surface of an intermediate part of a barrel so that the wire solder H is run out by pressing the knock piece in the radial direction of barrel. The device of this embodiment may be a side slide type wire rod feeding device in which the wire solder H is run out by sliding the knock piece in the lengthwise direction of barrel, or may be a rear end knock type wire rod feeding device in which the wire solder H is run out by pressing the knock piece in the lengthwise direction of barrel. Hereunder, a specific explanation will be given. As shown in Figure 1, a slider member 2 is slidably provided on the inside of the intermediate part of a barrel 1, and as shown in Figure 2, on the side wall of the slider member 2, two parallel inclined surfaces 3 are formed at opposed positions. With the inclined surface 3, pressing portions 6 of a knock piece (operating member) 5, which is mounted in a window hole 4 formed in the side wall of the barrel 1, are in contact. By pressing the knock piece 5 in the radial direction of the barrel 1, the slider member 2 is moved to the lower side in the figure (axial direction of the barrel 1). As shown in Figure 9, a plane portion 1a is formed in the lengthwise direction of the barrel 1, so that the barrel 1 has a D-shaped transverse cross section. In front of the plane portion 1a, the window hole in which the knock piece 5 is provided is formed as shown in Figure 1.

In front of the slider member 2, a collet (two-piece or three-piece, etc.) type chuck body 7 for gripping and releasing the wire solder H is pressed in and fixed. A front part of the chuck body 7 is surrounded by a chuck ring 8 for opening and closing the chuck body 7. In Figure 1, reference numeral 9 denotes an elastically springing member such as a coil spring which urges the chuck body 7 and the slider member 2 toward the upside in the figure of the drawing and closes the chuck body 7 to hold the wire solder H. The load of the elastically springing member is set at 200 to 600 g.

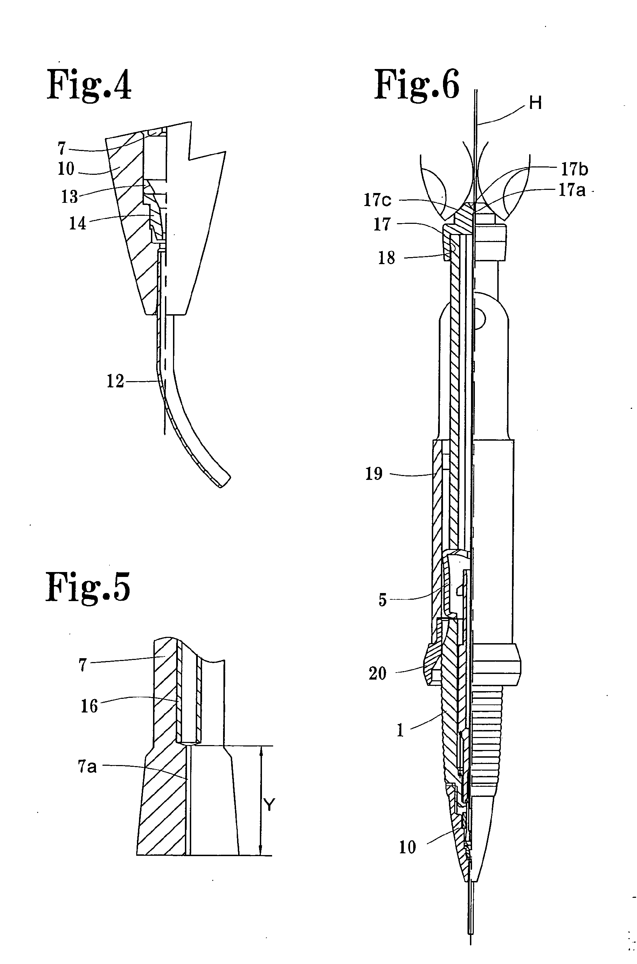

At the distal end of the barrel 1, a distal member 10 is detachably fixed by a means such as a screw. The distal member 10 may be formed integrally with the barrel 1. At the distal end of the distal member 10, a straight-line shaped distal end pipe (wire rod protective pipe) 11 is fixed. The distal end pipe 11 is formed of a metallic material such as stainless steel, iron, and aluminum, a heat resisting resin such as a fluorine-based resin, a metallic material covered with a heat resisting resin material, a metallic material coated with a heat resisting resin, or a heat resisting resin covered with a metallic material. The distal end pipe 11 may be a curved distal end pipe 12 as shown in Figure 4. Depending on the shape of object to be soldered, the curved distal end pipe is sometimes desirable. In particular, the curved distal end pipe is an effective means when a surrounded part is soldered.

As shown in Figure 3, at the upper end of the distal end pipe 11, a wire rod guide member 13 formed with a funnel-shaped through hole is installed. This wire rod guide member 13 may be formed integrally with the distal end pipe 11 or the distal member 10. The wire rod guide member 13 is used to guide the wire solder H easily into the distal end pipe 11. Between the wire rod guide member 13 and the distal end pipe 11, a locking member 14 (or, detent) consisting of a rubber-like elastic body is inserted to lightly hold the wire solder H and thereby to prevent the wire solder H from retreating. The locking member 14 may be formed integrally with the wire rod guide member 13 or the distal member 10.

Also, the maximum inside diameter a of the funnel-shaped through hole formed in the wire rod guide member 13 is two times or more as large as the outside diameter c of the wire solder H used. This setting guides the wire solder H easily into the through hole in the wire rod guide member 13. According to this setting, even if the tip end of the wire solder H is curved, the wire solder H can be guided gradually to the locking member 14 while being corrected. At the lower end of the distal end pipe 11, a small-diameter portion may be formed so that not only the outer peripheral portion but also the inner peripheral portion has a decreased diameter. Specifically, the distal end pipe 11 has an inside diameter of 0.5 mm, and the small-diameter portion may have an inside diameter of 0.38 mm. The diameter of the wire solder H is 0.3 mm. This permits that the stability (prevention of oscillation) of the wire solder H during operation is improved, and also the visibility is improved. Also, if the inside diameter b of the distal end pipe 11 is made about 1.25 to 10 times as large as the outside diameter c of the wire solder H used without being limited to this example, a good feeding operation can be obtained. On the other hand, if the inside diameter b of the pipe is less than 1.25 times the outside diameter c of the wire solder H, the sliding (passing) ability of the wire solder H is deteriorated by some curving thereof. If the inside diameter b of the pipe exceeds 10 times the outside diameter c of the wire solder H, there is a danger of occurring buckling of wire solder in the pipe. A preferable range of the inside diameter b of the distal end pipe 11 is 1.25 to 2 times the outside diameter c of the wire solder H. Also, considering the visibility and the stability at the pipe distal end, the protrusion length of the distal end pipe 11 is preferably in the range of 1.0 to 20.0 mm. Further, depending on the kind of object to be soldered, the feeding amount of the wire solder H is preferably set in the range of 0.5 to 2.0 mm.

As shown in Figure 5, in a gripping portion of the chuck body 7, a groove 7a of about 0.25 mm is formed. Although the groove 7a is formed as a groove by which the wire solder H is gripped and allowed to pass through in this embodiment, the groove 7a is not necessarily needed, and the gripping portion may simply be a flat plane portion. In particular, when a wire solder having a rectangular or elliptical transverse cross section is run out, the gripping portion is preferably a flat plane portion. This groove (wire rod gripping portion) 7a is a portion for gripping the wire solder H when the chuck body 7 is closed by the chuck ring 8, and the wire solder H is nipped and pressed by this gripping operation. That is to say, the curved wire solder H is corrected into a straight-line shape by this pressing operation. Moreover, the length Y of the groove (wire rod gripping portion) 7a is formed to be longer than the amount X (a length until the chuck ring 8 comes into contact with an inner surface step portion 10a) through which the chuck ring 8 moves (refer to Figures 3 and 5), so that the wire solder H is not run out without being corrected, and after being always subjected to the pressing and correcting operation at least once, the wire solder H passes through the locking member 14 and is run out. Therefore, if the correction of the wire solder H is a main purpose, it is preferable that the groove 7a be formed positively so that the wire solder H is pressed from the periphery so as to be surrounded and is corrected.

In Figure 1, reference numeral 15 denotes a ring-shaped spacer interposed between the barrel 1 and the distal member 10. By the presence or absence of the spacer 15 or the number of interposed spacers, the running-out amount of the wire solder H can be increased or decreased.

At the rear of the wire rod gripping portion, as shown in Figure 5, a front portion of a guide pipe 16 having the same inside diameter as that of the distal end pipe 11 is located within the chuck body 7, and a rear end part thereof is formed so as to penetrate the slider member 2 and extend to a rear part of the barrel 1. Although the chuck body 7 and the guide pipe 16 are formed as separate members in this example, the chuck body 7 and the guide pipe 16 may be fixed to each other, or may be formed integrally. Specifically, the guide pipe 16 may be moved back and forth in association with the back-and-forth movement of the chuck body 7. In a rear end part of the guide pipe 16, as shown in Figure 1, a wire rod inserting member 17 is pressed in and fixed. The wire rod inserting member 17 may be detachably arranged by an appropriate means such as screwing or concavo-convex engagement. Alternatively, in the case where the chuck body 7 and the guide pipe 16 are fixed to each other or are formed integrally, the rear end of the guide pipe may be slidable with respect to the wire rod inserting member 17.

The wire rod inserting member 17 is formed with a through hole 17a having an inside diameter equivalent to the inside diameter of the guide pipe 16, and is also formed with an inner surface conical portion 17b whose inside diameter decreases toward the lower end side of the wire rod inserting member 17. Also, on the upper outer surface of the wire rod inserting member 17, an outer surface conical portion 17c whose outside diameter decreases toward the upper end side of the wire rod inserting member 17 is formed. The longitudinal cross-sectional shape of this outer surface conical portion 17c has a substantially triangular portion that is formed when a thumb and the forefinger are brought into contact with each other (refer to Figure 6). This portion may be a stair-shaped step portion (refer to Figure 7). That is to say, when the wire solder H is inserted, if the wire solder H is pinched by the thumb and the forefinger, the same shape as that of the outer surface conical portion 17c of the wire rod inserting portion 17 is formed, and thereby the fingers are brought contact with each other so as to cover the outer surface conical portion 17c. At the same time, the wire solder H is guided by the inner surface conical portion 17b, and is introduced into the guide pipe 16. By making the distance from a portion in which the wire solder H is pinched to the guide pipe 16 as short as possible, buckling of the wire solder H, which may occur during this time, is prevented as far as possible. Although the wire rod inserting portion 17 is detachably fixed to an engagement portion 18 formed extendingly at the rear end of the barrel 1 in this example, the wire rod inserting portion 17 may be fixed so as to be undetachable.

In Figure 1, reference numeral 19 denotes a cylindrical rear casing surrounding a rear part of the barrel 1. The rear casing 19 can move back and forth in the axial direction of the barrel 1, and can stop at the advance position in a state of covering the knock piece 5. That is to say, as shown in Figure 6, by advancing the rear casing 19, the wire rod inserting member 17 is exposed from the rear end of the rear casing 19, and also by pressing the knock piece 5, the gripping of the wire solder H due to the chuck body 7 is released. In other words, in this embodiment, opening means for keeping the opened state of the chuck body 7 is constituted by the rear casing 19.

Although a ring member 20 is fixed to a front end part of the rear casing 19 in this example, the ring member 20 may be formed integrally with the rear casing 19. The circumscribed circle diameter of the ring member 20 is the maximum outside diameter of the contour of this feeding device. On the other hand, the rear inner surface of the rear casing 19 is circular in shape, but as shown in Figures 8 an 9, the rear inner surface of the rear casing 19 may be formed with a flat portion 21 similar to the plane portion 1a of the barrel 1. By forming the inner shape similar to the outer shape of the barrel 1, relative rotation of the rear casing 19 with respect to the barrel 1 is prevented.

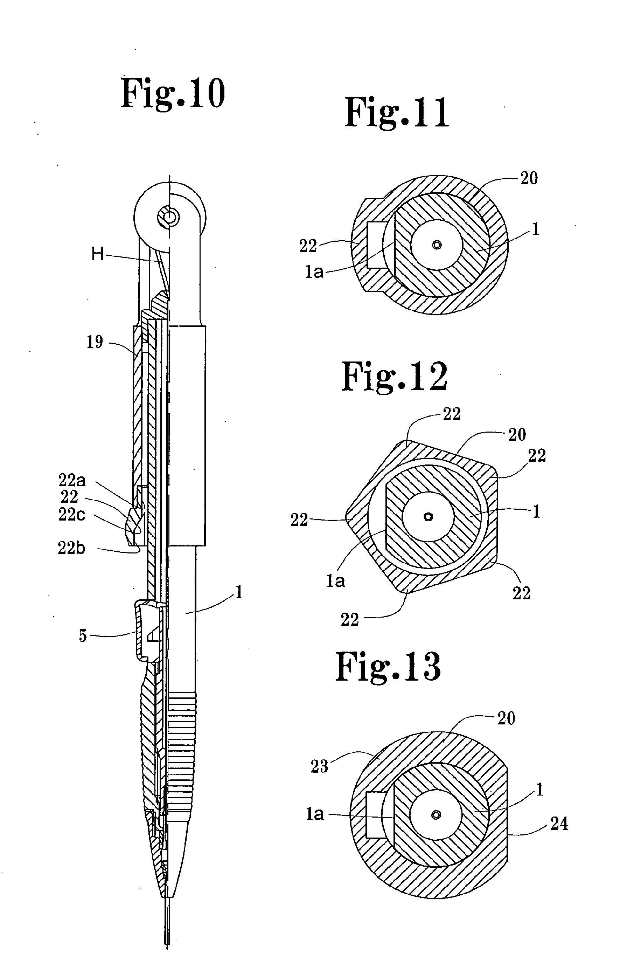

Also, as shown in Figures 10 and 11, an expanding portion 22 may be formed in a part of the outer surface of the ring member 20. The expanding portion 22 serves as rotation preventing means when the feeding device is placed on a table etc. Specifically, rolling of the feeding device is restrained by the expanding portion 22, and hence damage (collapse or bending of the distal end pipe 11) etc. due to dropping from a table are prevented. As shown in Figure 12, a plurality of expanding portions 22 are formed by making the cross-sectional shape of the ring member 20 polygonal, for example, pentagonal. Alternatively, the cross-sectional shape of the ring member 20 may be an elliptical shape, or an irregular shape in which a part of a circular shape is cut as shown in Figure 13 (that is, the outer surface of the ring member 20 may be formed by an arcuate portion 23 and a plane portion 24). Any shape other than a complete round not a little restrains rolling due to rotation.

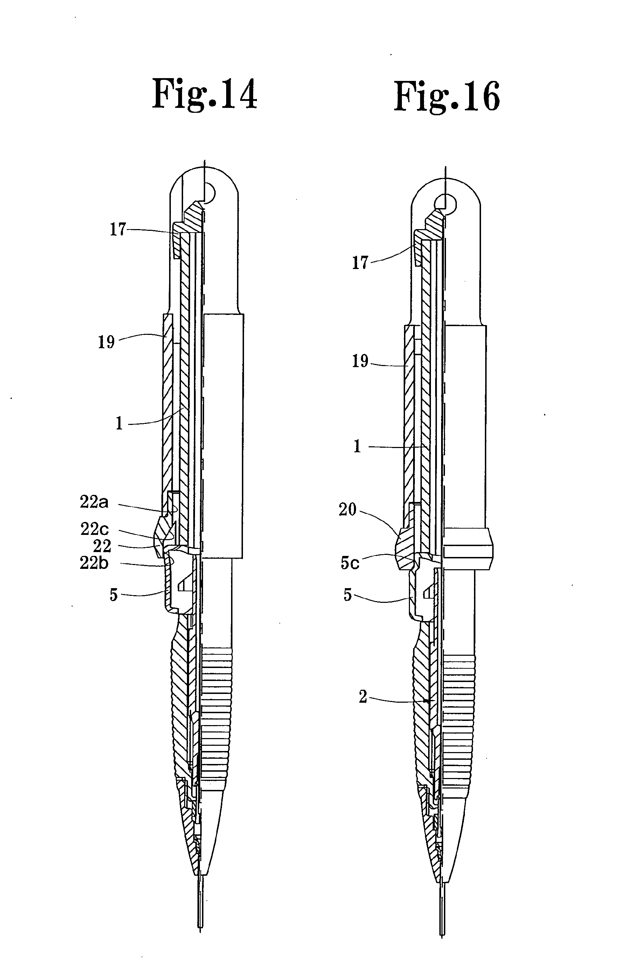

As shown in Figures 10 and 14, on the inner surfaces of the expanding portion 22 and the ring member 20, a small groove portion 22a (small-diameter portion 20a) so as to be directed to the knock piece 5 and a large groove portion 22b (large-diameter portion 20b) located in front of the small groove portion 22a are formed stepwise via an inclined surface 22c (inclined surface 20c). The small groove portion 22a and the large groove portion 22b may be formed continuously so as to have an inclined inner shape. That is to say, when the wire solder H is gripped again from a state in which the wire solder H is released by the small groove portion 22a, the knock piece 5 is raised about a half by the large groove portion 2 2b, and then the knock piece 5 is made in a completely pro j ecting state, thereby the knock piece 5 being raised stepwise from the barrel 1. As a result, the knock piece 5 is prevented from popping out from the barrel 1 due to a sudden rise of the knock piece 5.

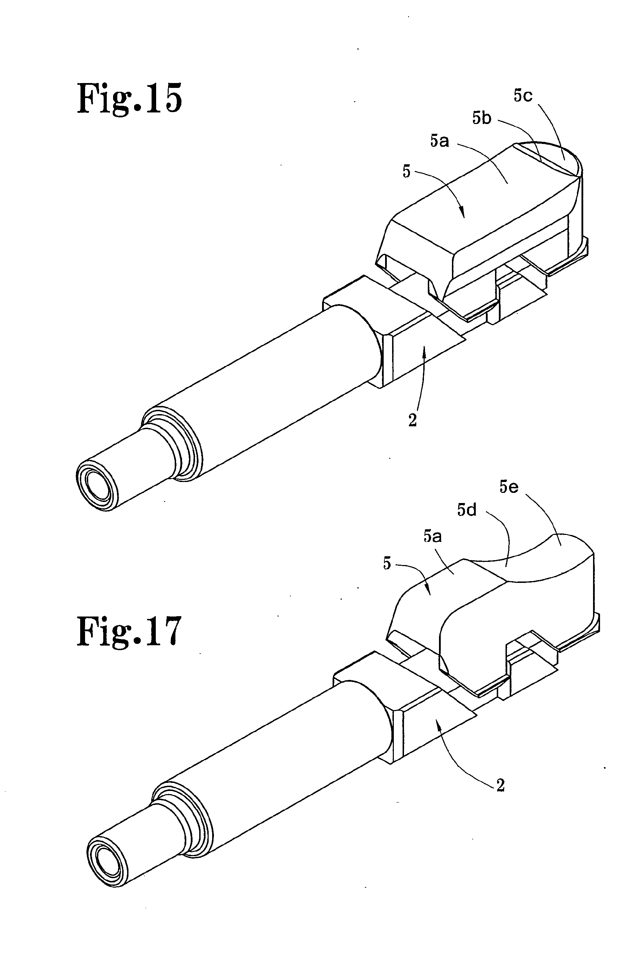

As shown in Figure 15, in a rear part of a pressing operation surface 5a of the knock piece 5, a depressed portion (step portion) 5c may be formed low in the pressing direction via an inclined surface 5b. That is to say, when the wire solder H is gripped again from a state in which the wire solder H is released by the contact of the pressing operation surface 5a with the inner surface of the ring member 20 (rear casing 19), the knock piece 5 is raised about a half by the depressed portion 5c (refer to Figure 16), and then the knock piece 5 is made in a completely projecting state, thereby the knock piece 5 being raised stepwise from the barrel 1. As a result, the knock piece 5 is prevented from popping out from the barrel 1 due to a sudden rise of the knock piece 5. Also, as shown in Figure 17, in place of the depressed portion 5c, a gentle arc-shaped inclined surface 5d is formed from a substantially central part of the pressing operation surface 5a to a rear end part thereof, and a portion near the rear end of the inclined surface 5d may be used as a depressed portion 5e corresponding to the depressed portion 5c. According to this configuration, the knock piece 5 is projected continuously and gradually, so that a smooth projecting operation is obtained.

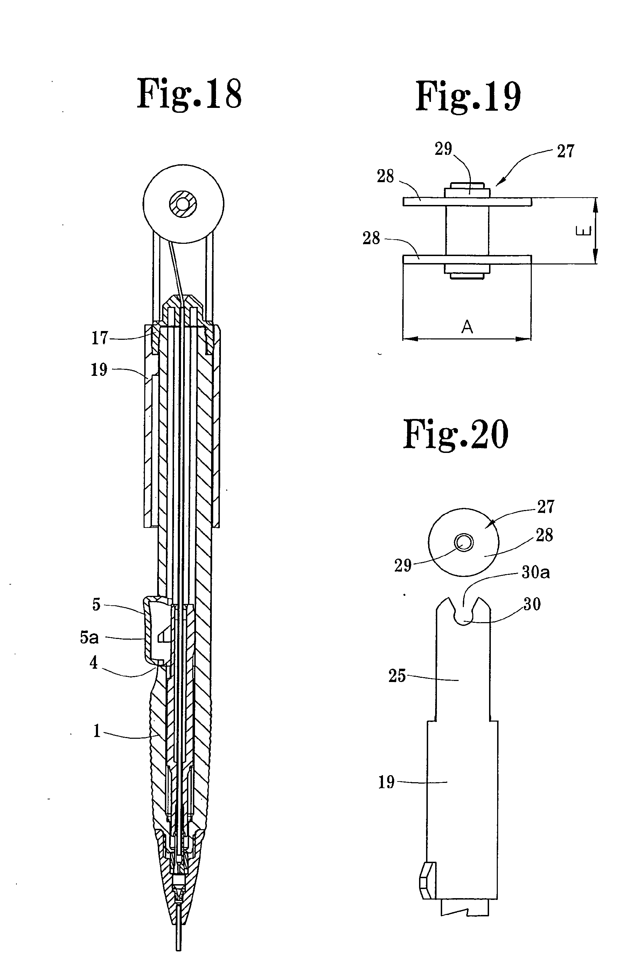

The above is an explanation of the example in which the knock piece 5 is returned gradually. In the case where the elastic spring force of the elastically springing member 9 is small, or the knock piece 5 is surely prevented from popping out from the barrel 1, as shown in Figure 18 , the inner surface of the rear casing 19 (in this example, the ring member is molded integrally with the rear casing 19) and the pressing operation surface 5a of the knock piece 5 may be flat in shape.

The rear casing 19 is described in further detail below. At the rear of the rear casing 19, holding elements 25 are extendingly provided at opposed positions, and in a gap 26 formed between the holding elements 25, a reel 27, which is wire rod storage means around which the wire solder H is wound, is arranged rotatably and detachably. Specifically, as shown in Figures 1 and 19, a rotating shaft portion (winding portion) 29 formed via disc-shaped collars 28 formed on both sides of the reel 27 is pivotally supported in through holes 30 formed in the holding elements 25. The configuration may be such that the rotating shaft portion 29 is formed by a separate member, that is, a rotating shaft made of a metallic material etc. is inserted in a resin-made reel, and the rotating shaft is pivotally supported in the through holes rotatably. Also, as shown in Figure 20, the configuration may be such that an upper part of the through hole 30 in the holding element 25 is cut out, and the rotating shaft portion 29 of the reel 27 is inserted through notches 30a. According to this configuration, the reel 27 can be replaced easily.

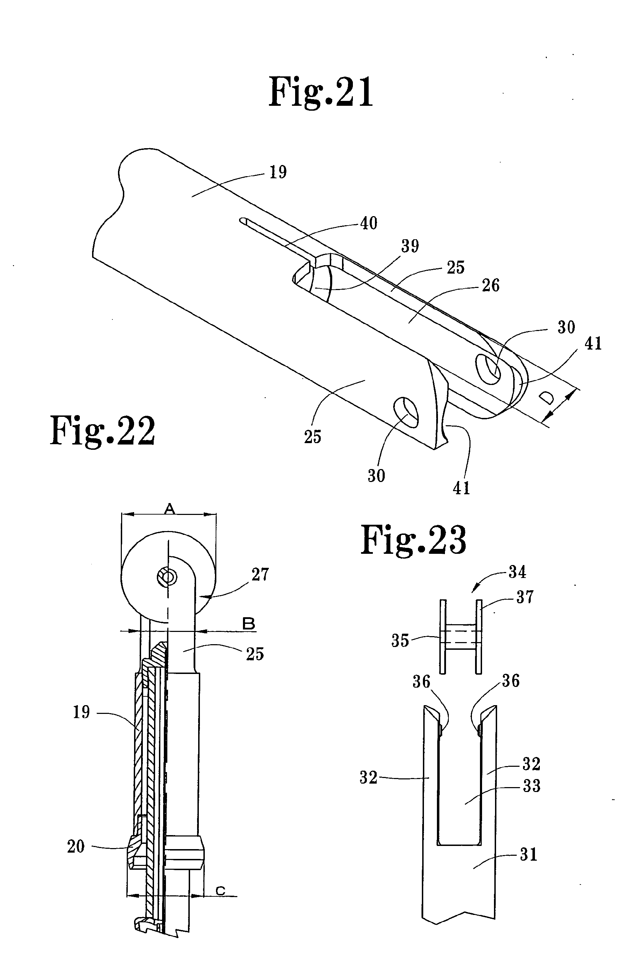

The width D (refer to Figure 21) of the gap 26 is set so as to be slightly narrower than the width E (refer to Figure 19) of the reel 27, so that when the reel 27 is rotated, resistance is given to the rotating operation, but the rotation resistance creates a resisting force that exerts no influence on the running-out of the wire solder H. Namely, the rotation resistance prevents unexpected rotation during the use, that is, inadvertent running-out operation of the wire solder H is prevented. Also, in an example shown in Figure 22, the outside diameter A of the reel 27 is larger than the outside diameters of the barrel 1 and the holding element 25 and the ring member 20 of the rear casing 19 (the width B of the holding element, the outside diameter C of the ring member). That is to say, the reel 27 is arranged rotatably so as to be exposed from the holding element 25 of the rear casing 19. By the exposure from the rear casing 19, the reel 27 is rotated easily if the wire solder H loosens, by which the looseness can be corrected. Also, by making the outside diameter of the reel 27 larger than the outside diameter of the ring member 20 having the maximum outside diameter, not only the looseness is corrected but also the rolling of the wire rod feeding device is prevented from occurring when the device is placed on a table etc.' Thereby, the feeding device is prevented as far as possible from dropping from the table, and resultantly breakage and bending of the distal end pipe 11 etc. are prevented.

Modified examples of the rear casing 19 and the reel 27 are shown in Figure 23 and explained below. At the rear of a rear casing 31, holding elements 32 are extendingly provided at confronting opposed positions, and in a gap 33 formed between the holding elements 32, a reel 34, which is the wire rod storage means around which the wire solder H is wound, is arranged rotatably and detachably. Specifically, a through hole 35 is formed in a center shaft of the reel 34, and the through hole 35 is pivotally supported on inner surface protrusions 36 formed on the inner surfaces of the holding elements 32. The surfaces of collar portions 37 of the reel 34 can be made flat, so that when the reel 34 is stored in a lapped manner, the reels can be stored surely so as to provide a sense of stability.

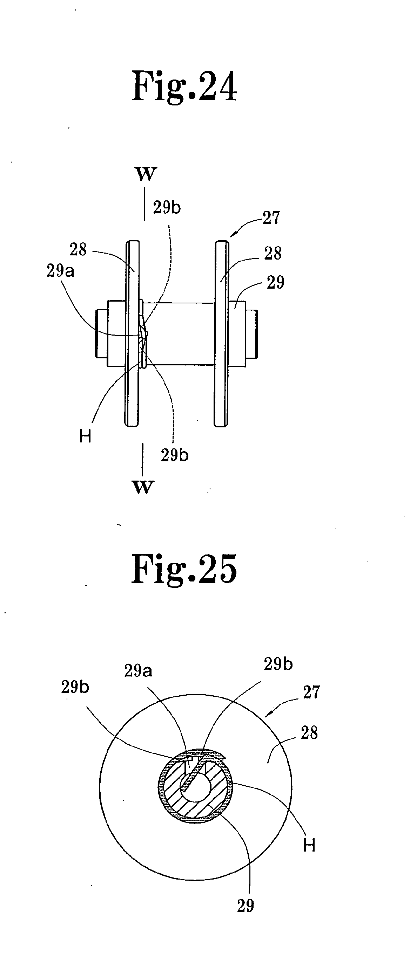

Further modified example of the reel 27 is shown in Figures 24 and 25 and explained below. In this example, the rotating shaft portion 29 of the reel 27 is formed with a hole through which an end part of the wire solder H is inserted. A specific explanation is given below. In a connecting portion between the rotating shaft portion 29 and the inner surface of the collar 28, a substantially triangular through hole 29a is formed. In a side part of the through hole 29a, a groove 29b is extended along the connecting portion between the rotating shaft portion 29 and the inner surface of the collar 28. That is to say, the end part of the wire solder H is inserted in this through hole 29a, and the wire solder H is wound around the rotating shaft portion 29. At this time, the wire solder H is fixed so as to cut into an inner surface corner part of the triangular through hole 29a. In other words, the wire solder H is fixed so that both of the inner surface corner part of the through hole 29a and the wire solder H are elastically deformed and bite into each other. Also, the winding start portion of the wire solder H runs into the groove 29b while being bent, so that the bent portion does not expand so much from the surface of the rotating shaft portion 29. Thereupon, the wire solder H wound next runs up once onto the bent portion (refer to Figure 25), but since the expansion amount is small, the wire solder H drops onto the surface of the rotating shaft portion 29 gently and comes into contact with the surface thereof. As a result, the next wound portion comes into contact with the first wound portion with no gap provided (refer to Figure 24), by which the wire solder H is wound in the lengthwise direction of the rotating shaft portion 29 in good order. Also, the wire solder H located above the winding start portion can be wound neatly without collapsing. This is because the expansion state formed by the bent portion is absorbed by the groove 29b. Since the groove 29b is formed on both sides of the through hole 29a, the same effect can be achieved even if the wire solder H is wound from the positive direction or the opposite direction.

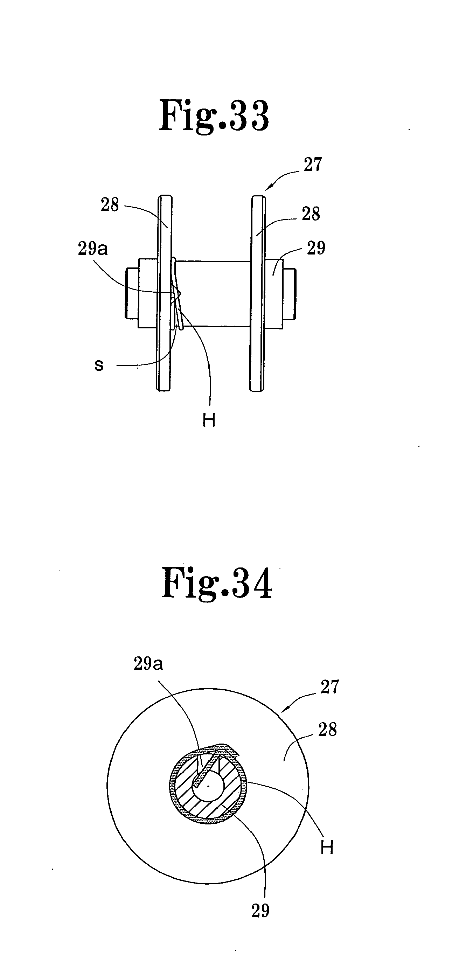

It is noted that for a reel that is not formed with the grooves 29b, as shown in Figure 33, the winding start portion of the wire solder H runs up onto the surface of the rotating shaft portion 29 while being bent, and the bent portion expands from the surface of the rotating shaft portion 29 through the wire diameter or larger, so that the wire solder H wound next runs up onto the bent and expanded portion (refer to Figure 25), and, at this moment, drops onto the surface of the rotating shaft portion 29 vigorously and comes into contact with the surface thereof. As a result, a gap S is produced between the first wound portion and the next wound portion (refer to Figure 34), so that the wire solder H cannot be wound neatly.
The groove 29b is especially effective for a reel in which the outside diameter of the rotating shaft portion 29 is five to ten times the wire diameter of the wire solder used. If the outside diameter of the rotating shaft portion 29 is less than five times, the above-described effect cannot be achieved regardless of the presence of groove. If the outside diameter of the rotating shaft portion 29 exceeds forty times, the next wound wire solder drops onto the surface of the rotating shaft portion gently and hence is wound neatly even if the groove is absent. Needless to say, the groove may be formed even in a reel in which the outside diameter of the rotating shaft portion 29 exceeds forty times.

In the above-described first embodiment, a rotatable reel is used as storage means for wire rod. However, the configuration may be such that, for example, a wound or folded wire solder H is stored in a case, and the case is insertedly provided in the wire rod feeding device so that the wire solder H is run out from the case in consecutive order. Since the wire solder H is stored in the case, the wire solder H is prevented from coming loose not only during insertion but also before insertion.

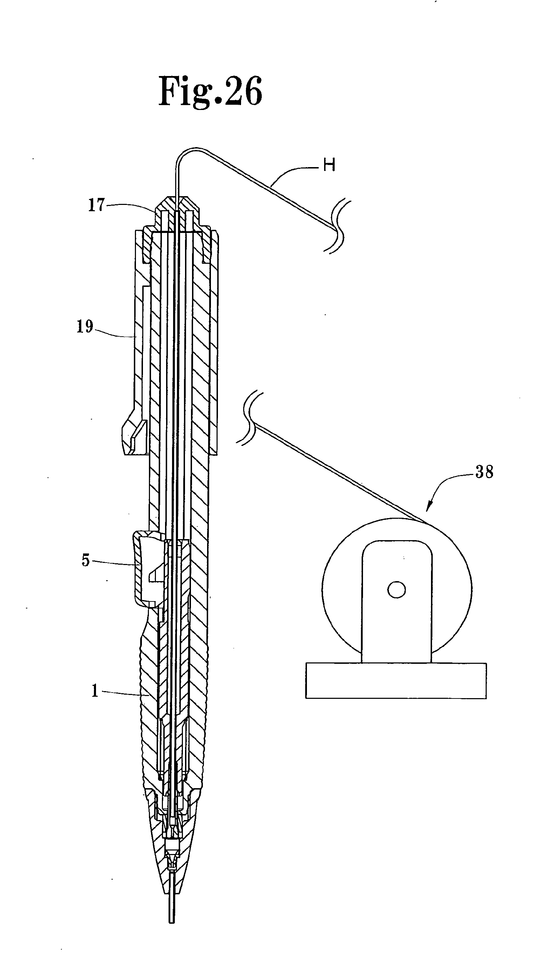

Also, in this embodiment, the reel 27 (34), which is the wire rod storage means around which the wire solder H is wound, is attached to the rear casing 19 to improve the workability (handling properties of feeding device). However, in the case where the wire solder H is used in large amounts temporarily, as shown in Figure 26, storage means 38 for the wire solder H may be disposed on the outside of the feeding device. In this case, a large amount of wire solder H can be stored, and work can be continued for a long period of time.

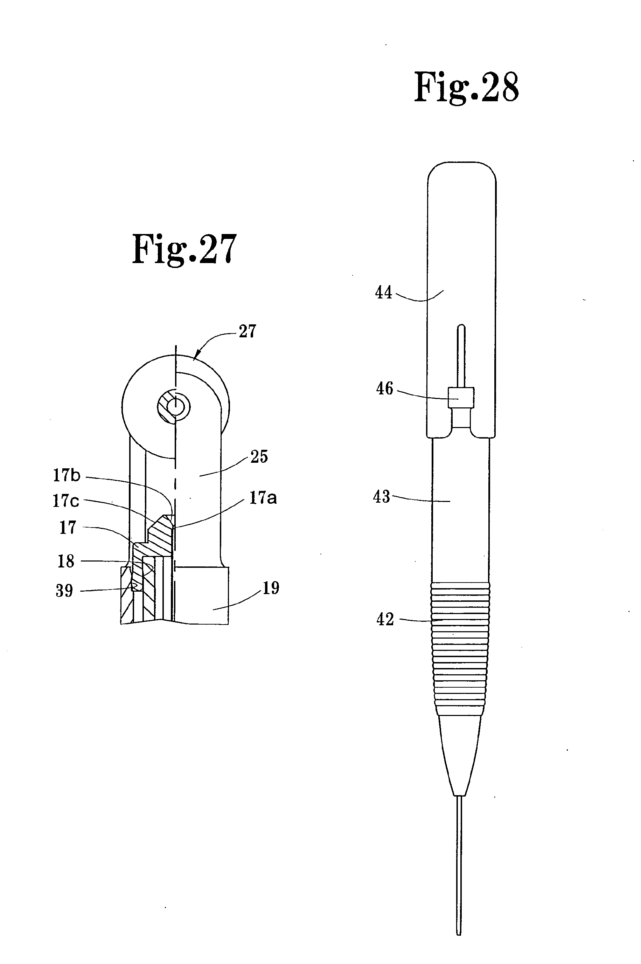

Also, on the inner surface of an intermediate part of the rear casing 19, as shown in Figure 27, an engagement portion 39 for engaging with the wire rod inserting member 17 is formed. The engagement portion 39 engages with the wire rod inserting member 17 when the rear casing 19 is retreated with respect to the barrel 1, namely, in the usage state to prevent inadvertent advancing. In Figure 21, reference numeral 40 denotes a slit formed near the engagement portion 39. By elastic opening and closing due to the slit 40, the engagement portion 39 is engaged with and disengaged from the wire rod inserting member 17. This configuration is not necessarily required depending on the shape of the engagement portion 39. Also, the configuration may be such that the engagement portion 39 is not used or formed and, instead, the rear casing 19 is pressed in and fixed to the wire rod inserting member 17 by utilizing the opening/closing force of the slit 40.

Further, arc-shaped chamfering (chamfered portion 41) is performed above the through hole 30 on the rear inner surface of the holding element 25. If the rotating shaft portion 29 of the reel 27 is put on the rear end of the holding element 25 and is pressed in, the rotating shaft portion 29 is introduced so as to be guided in the central direction by the chamfered portion 41, and hence arrives at and fits in the through hole 30 easily.
Also, in Figure 1, reference numeral 42 denotes a gripping portion that is manually gripped by fingers. The gripping portion 42 is knurled to prevent slippage.

As explained above, this example shows a wire rod (wire solder H) feeding device used to solder electronic components onto a substrate. For this reason, the barrel 1, the wire rod inserting member 17, the rear casing 19, the reel 27, and the like are molded of a conductive resin. That is to say, by allowing the generated static electricity to radiate onto a floor etc., the electronic components are prevented from being damaged by the static electricity. The conductive resin preferably has a volume resistivity equal to or lower than 10¹⁰ Ω·cm. Commercially-available products of the resin are cited below. As POM (polyacetal), Tenac TFC64 and EF750 (manufactured by Asahi Chemical Industry Co., Ltd.), Duracon CH-10, CH-15, CH-20, EB-08, EB-10 and ES-5 (manufactured by Polyplastics Co., Ltd.), and Iupital ET-20 (manufactured by Mitsubishi Engineering-Plastics Corporation) can be cited. Also, as ABS (acrylonitrile butadiene styrene), Stylac ABS IC10N and IC10E (manufactured by Asahi Chemical Industry Co. , Ltd.) can be cited, and as PC (polycarbonate), SD Polyca CF5101V, CF5201V, CF5301V and FD-9082I-2 (manufactured by Sumitomo Dow Ltd.) can be cited. Further, as PP (polypropylene), Daicel PP PB2N1 (manufactured by Daicel Polymer Ltd.) can be cited, and as PBT (polybutylene terephthalate), DURANEX CD7400B5 (manufactured by Polyplastics Co. , Ltd.) can be cited. Still further, as PPS (polyphenylene sulfide), FORTORN 2130A1, 7140A4 and 7340A4 (manufactured by Polyplastics Co., Ltd.) andTorelinaA756MX02 (manufactured by Toray Industries, Inc.) can be cited, and as PPE (modified polyphenylene ether), Iupiace EV08, EV12 and EV20 (manufactured by Mitsubishi Engineering-Plastics Corporation) can be cited.

As the wire solder used in the feeding device in accordance with the present invention, a wire solder formed by extruding or elongating a columnar solder into a linear shape is used. The wire solder having a wire diameter of 0.1 to 2.0 mm can be used. By changing the shape of gripping portion of the chuck body, a wire solder having an appropriate diameter can be used. Regarding the solder material used in the feeding device, not only the conventional Sn-Pb solder such as 60 mass% Sn - 40 mass% Pb or 63 mass% Sn - 37 mass% Pb but also a lead-free solder in which other elements are added to Sn, the main component, such as Sn - 3.0 mass% Ag - 0.5 mass% Cu, and which will be used in the future in consideration of environment can be used.

Further, in the feeding device in accordance with the present invention, a resin flux cored solder formed by impregnating the interior of wire solder with a flux component such as rosin can also be used.
These wire solder and resin flux cored solder are used by being wound around a reel member formed with disc-shaped collar portions at both ends of a winding portion. The wire solder and the resin flux cored solder that are used for the feeding device in accordance with the present invention are easily subjected to winding collapse after being wound around the reel member because they are soft. Therefore, as described above, the through hole 29a is provided in the connecting portion between the rotating shaft portion 29 and the inner surface of the collar 28 of the reel 27, and thereby the wire solder is inserted and wound at the winding start time, by which the winding collapse can be prevented. The through hole 29a formed in the reel 27 is not necessarily be triangular in shape, and may be circular or elliptical. Considering the fixing property of the end part of the wire solder H and the reel 27, the through hole 29a is preferably triangular as described above.

Next, an application example of the wire rod feeding device will be explained. In order to insert the wire solder in this device, the rear casing 19 is advanced. By the advance of the rear casing 19, the wire rod inserting member 17 is completely exposed from the rear casing 19. At this time, the ring member 20 (rear casing 19) of the rear casing 19 is in a state of covering the knock piece 5 and presses the knock piece 5, so that the chuck body 7 is in an opened state. Then, the wire solder H is pinched by the thumb and the forefinger, and the thumb and the forefinger are brought into contact with each other so as to cover the outer surface conical portion 17c of the wire rod inserting member 17. At the same time, the wire solder H is introduced by the inner surface conical portion 17b and is guided into the guide pipe 16. When this operation is performed continuously, the wire solder H passing through the guide pipe 16 is inserted into the chuck body 7 and the distal end pipe 11 (refer to Figures 6 and 7). After the completion of insertion, the rear casing 19 is retreated, by which the knock piece 5 is raised about a half by the large-diameter portion 20b of the ring member 20. When the rear casing 19 is further retreated, the knock piece 5 is completely exposed from the rear casing 19 (ring member 20), and the knock piece 5 also becomes in a completely projected state, so that the chuck body 7 is closed to grip the wire solder H.

Next, an application example in which the knock piece 5 is formed with the depressed portion 5c. The inserting operation of the wire rod into the wire rod inserting member 17 is the same. After the completion of insertion, when the rear casing 19 is retreated, the front inner surface of the ring member 20 comes into contact with the depressed portion 5c of the knock piece 5 (refer to Figure 16). As a result, the knock piece 5 is raised about a half. When the rear casing 19 is further retreated, the knock piece 5 is completely exposed from the ring member 20 (rear casing 19), and the knock piece 5 also becomes in a completely projected state, so that the chuck body 7 is closed to grip the wire solder H.

When the knock piece 5 is pressed in the state in which the wire solder H is inserted, the slider member 2 and the chuck body 7 are advanced by the contact of the pressing portion 6 with the inclined surface 3 of the slider member 2. At this time, since the wire solder H is also gripped by the gripping portion of the chuck body 7, the wire solder H is run out from the reel 27, and is advanced while sliding in a state in which some frictional resistance is given by the guide pipe 16. As a result, the wire solder H is run out from the small-diameter portion of the distal end pipe 11. Before long, the chuck ring 8 comes into contact with the inner surface step portion 10a, so that the advance movement of the wire solder H is regulated, and the chuck body 7 is opened. In this process, the wire solder H run out from the reel 27 passes through an internal space of the rear casing 19, so that the wire solder H is supplied exactly without being subject to the influence of external force etc. and hence without being bent. Also, the wire solder H is advanced so as to be drawn by the wire rod inserting member 17 and the guide pipe 16, so that even a somewhat bent wire solder is corrected into a straight state. Further, since the amount (length) of the wire solder H pressed and corrected by the gripping operation of the chuck body 7 is larger than the amount of the wire solder H run out, the wire solder H is not run out without being corrected, and is run out in a pressed and corrected state always at least once, so that the wire solder H is forced into a further straight state, and is run out reliably. Then, when the pressing operation of the knock piece 5 is released, the chuck body 7 and the slider member 2 are retreated and returned by the urging force of the elastically springing member 9.

In the case where the wire solder H stored on the reel 27 is used up, the two holding elements 25 are pinched by fingers etc. to open the holding elements 25, and the reel 27 in which the wire solder H is used up is removed. Next, a wire solder H is drawn out to some extent from a new reel 27, the wire solder H being caused to pass through the wire rod inserting member 17, the guide pipe 16, and the like and being gripped by the chuck body 7 as described above, and then the reel 27 is attached to the holding elements 25.

### [Second embodiment]

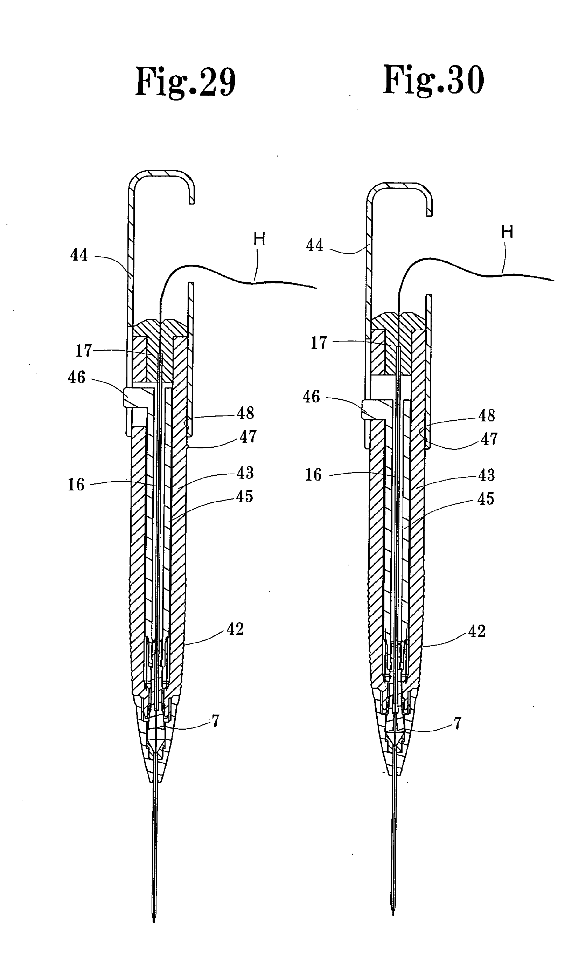

Next, a second embodiment of a wire rod feeding device in accordance with the present invention will be described with reference to Figures 28 to 30. In the above-described first embodiment, the wire solder H is run out by pressing the knock piece provided on the side wall of the barrel. By contrast, in the second embodiment, a knock piece 44 is provided in the rear part of the barrel 43. Hereunder, a specific explanation is given. A slider member 45 having the chuck body 7 is formed extending to a position near the rear part of the barrel 43, and a protrusion 46 is formed so as to project transversely from a rear end part of the slider member 45. The protrusion 46 engages with the knock piece 44 installed slidably at the rear of the barrel 43. Namely, when the knock piece 44 is pressed downward, the chuck body 7 advances via the slider member 45.
Also, the guide pipe 16 is fixed in the chuck body 7 as in the first embodiment. Although the wire rod inserting member 17 is fixed to a rear part of the guide pipe 16, the configuration may be such that the rear part of the guide pipe 16 is slidable in the wire rod inserting member 17.

In order to keep the opened state of the chuck body 7, engagement means is provided on the barrel 43 and the knock piece 44. Specifically, a convex portion 47 is formed in an outer peripheral part of the barrel 43, and a concave portion 48 engaging with the convex portion 47 is formed in the inner surface of the knock piece 44. Namely, when the knock piece 44 is advanced exceeding the ordinary wire rod feeding operation to advance and open the chuck body 7, the convex portion 47 of he barrel 43 and the concave portion 48 of the knock piece 44 are engaged with each other, by which the opening of the chuck body 7 is maintained. The wire solder H is inserted in the state in which the chuck body 7 is open. After the insertion, if the knock piece 44 is disengaged from the barrel 43, the chuck body 7 grips the wire solder H again, and the running-out can be performed.

### [Third embodiment]

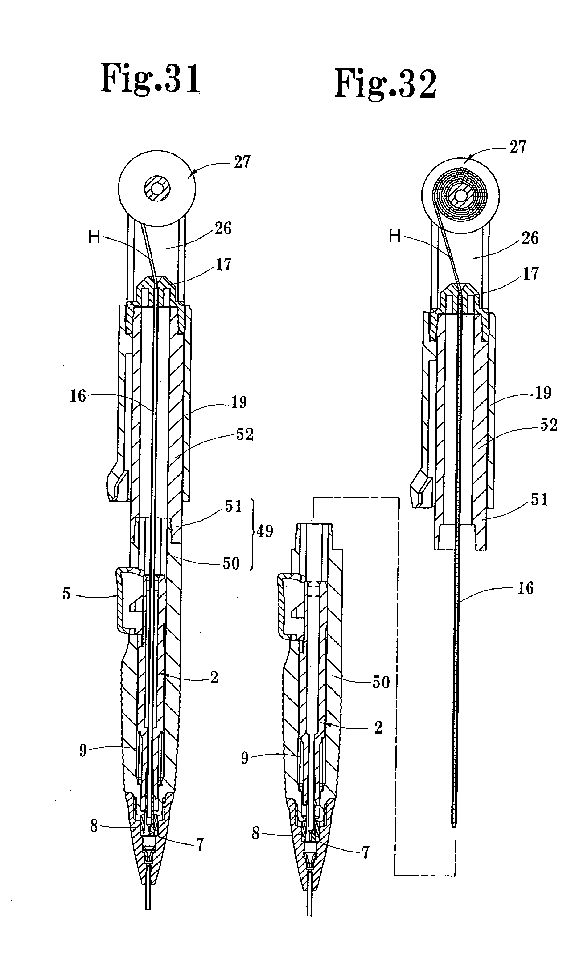

Next, a third embodiment of a wire rod feeding device in accordance with the present invention will be described with reference to Figures 31 and 32. In the third embodiment, a barrel 49 is divided into two pieces, and these two pieces are connected detachably to each other by a publicly known means such as concavo-convex engagement. Hereunder, a specific explanation is given. The barrel 49 is made up of a front casing 50 and a cartridge portion 51. On the inside of an intermediate part of the front casing 50, the slider member 2 is arranged slidably as in the aforementioned example, and the knock piece 5 engages with the slider member 2. Also, in front of the slider member 2, the collet type chuck body 7 for gripping and releasing the wire solder H is pressed in and fixed. In front of the chuck body 7, the chuck ring 8 for opening and closing the chuck body 7 is surroundingly provided. Reference numeral 9 denotes the elastically springing member, such as a coil spring, that urges the chuck body 7 and the slider member 2 toward the upside in the figure and closes the chuck body 7 to hold the wire solder H.

On the other hand, the cartridge portion 51 includes a rear cylinder 52 detachably connected to the front casing 50, the rear casing 19 and the wire rod inserting member 17, which are attached so as to be slidable with respect to the rear cylinder 52 as in the above-described embodiments, and the reel 27 provided detachably on the holding element 25 of the rear casing 19. Reference numeral 16 denotes the guide pipe fixed to the wire rod inserting member 17. The wire solder H can be guided exactly by this guide pipe 16.
By forming the rear part of the barrel 49 as a cartridge in this manner, the user etc. can replace the wire solder H without touching directly the wire solder H, so that poor bonding of the wire solder H due to sweat, hand grease, etc. can be prevented. Namely, from the state shown in Figure 32, the cartridge portion 51 is connected to the front casing 50, and then the reel 27 is turned, so that the wire solder H can be guided to the chuck body 7. When the knock piece 5 is pressed in this state, the wire solder H is run out. Therefore, the user can replace and run out the wire solder H without touching the wire solder H.

### [Example]

Manual soldering of electronic equipment was performed by using the wire rod feeding device in accordance with the present invention. The wire rod used was a lead-free resin flux cored solder formed of a material of Sn - 3.0 mass% Ag - 0.5 mass% Cu and having a wire diameter of 0.3 mm, and chip components of a cellular phone substrate was corrected by using this wire rod. A wire rod of about 0.6 mm could be run out by one knock, and a resin flux cored solder of 5 meters was used for 8-hourwork. During this work, the running-out amount of wire rod was not changed, and the outline shape of wire rod was not damaged.

### Industrial Applicability

The wire rod feeding device in accordance with the present invention can use not only a soldering material but also a wire rod made of a soft material having a hardness equal to or lower than 20 in the Brinell hardness test. For the wire rod feeding device, for example, a gold wire used for semiconductor wire bonding, an enameled wire and copper wire used for a coil, a tussah, and a thread for sewing can be used. In the case of the wire solder, a wire solder having a hardness of 4 to 20 in the Brinell hardness test is preferably used.

## Claims

1. A wire rod feeding device for feeding a wire rod formed of a soft material, wherein the wire rod is gripped and released, and is run out by a chuck body which is movable back and forth; and opening means for keeping an opened state of the chuck body is provided.

2. A wire rod feeding device for feeding a wire rod formed of a soft material, wherein the wire rod is gripped and released, and is run out by a chuck body which is movable back and forth; and a returning operation of an operating member for operating the chuck body is performed gradually.

3. A wire rod feeding device for feeding a wire rod formed of a soft material, wherein the wire rod is gripped and released, and is run out by a chuck body which is movable back and forth; and the length of a wire rod gripping portion of the chuck body is set so as to be longer than the running-out amount of the wire rod.

4. A wire rod feeding device for feeding a wire rod formed of a soft material, wherein wire rod storage means for storing the soft wire rod is provided on a device body.

5. The wire rod feeding device according to claim 2, wherein a knock piece for operating the chuck body is arranged on a side wall of a barrel in an exposed state; opening means for opening the chuck body by pressing the knock piece in the radial direction of the barrel is arranged so as to be movable back and forth with respect to the barrel; and a small-diameter portion and a large-diameter portion are formed successively on the inner surface of the opening means toward the knock piece.

6. The wire rod feeding device according to claim 2, wherein a knock piece for operating the chuck body is arranged on a side wall of a barrel in an exposed state; opening means for opening the chuck body by pressing the knock piece in the radial direction of the barrel is arranged so as to be movable back and forth with respect to the barrel; and
the knock piece is formed successively with step portions, which have a different height in the pressing direction of the knock piece, toward the moving direction of the opening means.

7. The wire rod feeding device according to claim 2, wherein a knock piece for operating the chuck body is arranged on a side wall of a barrel in an exposed state; opening means for opening the chuck body by pressing the knock piece in the radial direction of the barrel is arranged so as to be movable back and forth with respect to the barrel; and
the knock piece is formed with an inclined surface, which is inclined in the pressing direction of the knock piece, toward the moving direction of the opening means.

8. The wire rod feeding device according to claim 3, wherein a chuck ring for opening and closing the chuck body is arranged at the outer periphery in front of the chuck body; and the movement amount of the chuck ring is set so as to be shorter than the length of a wire rod gripping portion of the chuck body.

9. The wire rod feeding device according to claim 4, wherein the wire rod storage means is detachably provided on the device body.

10. The wire rod feeding device according to claim 4, wherein the wire rod storage means is exposed from the device body.

11. The wire rod feeding device according to claim 4, wherein the wire rod is wound around the wire rod storage means.

12. The wire rod feeding device according to claim 4, wherein the wire rod storage means is provided rotatably.

13. The wire rod feeding device according to claim 4, wherein rotation resistance is given to the wire rod storage means.

14. The wire rod feeding device according to claim 4, wherein the wire rod is gripped and released, and is run out by a chuck body which is movable back and forth; and opening means for the chuck body is provided on the device body, and the wire rod storage means is arranged on the opening means.

15. The wire rod feeding device according to claim 4, wherein the wire rod storage means is a reel member formed with disc-shaped collar portions at both ends of a winding portion.

16. The wire rod feeding device according to claim 4, wherein rotation preventing means is provided on the outside of the feeding device.

17. The wire rod feeding device according to claim 16, wherein the rotation preventing means is an expanding portion.

18. The wire rod feeding device according to claim 16, wherein the rotation preventing means is of a polygonal or irregular shape.

19. The wire rod feeding device according to any one of claims 1 to 4, wherein the wire rod feeding device is a device for feeding a wire rod formed of a soft material; the wire rod is gripped and released, and is run out by a chuck body which is movable back and forth; and a wire rod protective pipe is provided in front of the chuck body, the inside diameter of the wire rod protective pipe being two times or less the outside diameter of the wire rod used.

20. The wire rod feeding device according to any one of claims 1 to 4, wherein the wire rod feeding device is a device for feeding a wire rod formed of a soft material; the wire rod is gripped and released, and is run out by a chuck body which is movable back and forth; and a wire rod protective pipe is provided in front of the chuck body, the inside diameter of the wire rod protective pipe being 1. 25 times ormore the outside diameter of the wire rod used.

21. The wire rod feeding device according to any one of claims 1 to 3, wherein a wire rod guide member is provided between the chuck body and a wire rod protective pipe, and the maximum inside diameter of the wire rod guide member is two times or more of the outside diameter of the wire rod used.

22. The wire rod feeding device according to any one of claims 1 to 3, wherein a wire rod inserting member is arranged at the rear of the chuck body, and conical portions are formed on the inner and outer surfaces of the wire rod inserting member.

23. The wire rod feeding device according to any one of claims 1 to 3, wherein a wire rod guide pipe is inserted in the chuck body, and a wire rod inserting member is arranged at the rear end of the wire rod guide pipe.

24. The wire rod feeding device according to any one of claims 1 to 3, wherein a pipe is provided at least on one side in the longitudinal direction of the chuck body, and the pipe and the chuck body move in association with each other.

25. The wire rod feeding device according to any one of claims 1 to 4, wherein the soft wire rod is a wire solder or a resin flux cored solder.

26. The wire rod feeding device according to claim 25, wherein the wire solder or the resin flux cored solder is wound around a reel member formed with disc-shaped collar portions at both ends of a winding portion.

27. A wire solder used for a wire rod feeding device, wherein:
the wire rod is gripped by and released from the wire rod feeding device and is run out by a chuck body which is movable back and forth, and opening means for keeping an opened state of the chuck body is provided; and wherein
the wire solder is formed of a material having a hardness equal to or lower than 20 in the Brinell hardness test.

28. The wire solder according to claim 27, wherein the wire solder is wound around a reel member formed with disc-shaped collar portions at both ends of a winding portion.
